# EUROPÄISCHE PATENTANMELDUNG

(11) **EP 4 201 851 A1**
(43) Veröffentlichungstag der Anmeldung: **28.06.2023**
(21) Anmeldenummer: 23154123.6
(22) Anmeldetag: 21.02.2017
(51) Int. Cl.: B65G 47/08, B65G 43/08

(54) **VORRICHTUNG UND VERFAHREN ZUM UMGANG MIT HINTEREINANDER BEWEGTEN STÜCKGÜTERN**

(30) Priorität: 13.12.2016 DE 102016124250
(62) Teilanmeldung aus: 17710138.3
(71) Anmelder: Krones Aktiengesellschaft, 93073 Neutraubling (DE)
(72) Erfinder: MEHDI, Arsalan, 93073 Neutraubling (DE); BEER, Erhard, 93073 Neutraubling (DE); KOLLMUSS, Manuel, 93073 Neutraubling (DE); ASTNER, Michael, 93073 Neutraubling (DE)
(74) Vertreter: Benninger, Johannes

(57) **Zusammenfassung**

Die Erfindung betrifft eine Vorrichtung und ein Verfahren zum Umgang mit bewegten Stückgütern. Die Vorrichtung umfasst einen Manipulator für die Stückgüter, wenigstens eine Transporteinrichtung, über welche die bewegten Stückgüter zu einem Erfassungsbereich des mindestens einen Manipulators transportiert werden und wenigstens eine dem Erfassungsbereich und/oder einem Bewegungsraum des wenigstens einen Manipulators zugeordnete Horizontalfördereinrichtung, über welche die bewegten Stückgüter in dem Erfassungsbereich des mindestens einen Manipulators transportiert werden. Weiterhin umfasst die Vorrichtung wenigstens ein Detektionsmittel zur Erfassung von Raumkoordinaten und/oder Positions- und/oder Umrissdaten der durch den Manipulator abzugreifenden Stückgüter, wobei die wenigstens eine Horizontalfördereinrichtung und die wenigstens eine Transporteinrichtung auf Grundlage der Raumkoordinaten und/oder Positions- und/oder Umrissdaten kalibrierbar und/oder steuerbar sind.

## Beschreibung

Die vorliegende Erfindung betrifft eine Vorrichtung und Verfahren zum Umgang mit hintereinander bewegten Stückgütern gemäß den Merkmalen der Oberbegriffe der Ansprüche 1 und 10.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 465 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Mit allen diesen bekannten Handhabungssystemen werden in erster Linie präzise Positionierungen von Stückgütern, Paketen, Gebinden und/oder Artikeln für eine möglichst störungsfreie und zuverlässige Lagenbildungs-, Palettierungs- und/oder Verpackungsvorbereitung angestrebt. Ein Nebenziel, das jedoch zunehmend wichtiger wird, besteht darin, hierbei die Taktzeiten zu reduzieren, ohne hinsichtlich eines bereits erreichten Grades an Präzision und/oder hinsichtlich der bereits erreichten Zuverlässigkeit Einbußen in Kauf nehmen zu müssen.

Angesichts des bekannten Standes der Technik kann es als Ziel der vorliegenden Erfindung angesehen werden, eine exakte und positionsgenaue Verarbeitung und Handhabung von Stückgütern zu ermöglichen, die in mindestens einer Reihe befördert bzw. transportiert werden. Die Position der angelieferten Stückgüter sollte im Erfassungsbereich eines Manipulators immer einer vordefinierten IST- Position entsprechen, um ein gezieltes Erfassen der Stückgüter durch den Manipulator zu ermöglichen, insbesondere ohne in die Bewegungssteuerung des Manipulators eingreifen zu müssen und ohne dass hierzu ein großer Rechen- und/oder Steuerungsaufwand erforderlich sein soll.

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung eines Manipulators betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einer Vorrichtung zum Umgang mit bewegten Stückgütern und mit einem Verfahren zum Umgang mit bewegten Stückgütern erreicht, welche die Merkmale der unabhängigen Patentansprüche 1 und 12 umfassen. Merkmale vorteilhafter Weiterbildungen der Erfindung ergeben sich aus den jeweiligen abhängigen Ansprüchen.

Die Erfindung bezieht sich auf eine Vorrichtung bzw. Handhabungsvorrichtung und auf ein Verfahren zum Umgang mit bewegten Stückgütern. Wenn daher im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit bewegten Stückgütern gemeint. Vorzugsweise betrifft dies ein Verfahren zum Umgang mit in mindestens einer Reihe hintereinander bewegten Stückgütern. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit bewegten Stückgütern gemeint, insbesondere zum Umgang mit in mindestens einer Reihe hintereinander bewegten Stückgütern. Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den bewegten Stückgütern kann es sich gemäß einer bevorzugten Ausführungsform um in mindestens einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in mindestens einer Reihe hintereinander bewegten Stückgüter können dabei je nach Anforderung von nachfolgenden Handhabungsvorrichtungen gleich oder unterschiedlich ausgebildet sein.

Die in einer Reihe ohne Abstände oder mit minimalen Abständen bewegten und/oder zu einem - insbesondere Manipulationsbereich bzw. Erfassungsbereich genannten - Bereich beförderten, mindestens zwei unmittelbar aufeinanderfolgenden Stückgüter werden als geschlossene Formation transportiert. Mit dem Begriff der geschlossenen Formation ist eine weitgehend lückenlose Aufeinanderfolge von Stückgütern gemeint, die hintereinander transportiert werden. Die geschlossene Formation im Sinne der vorliegenden Erfindung kann eine endliche Länge haben und eine begrenzte Zahl von Stückgütern umfassen, wonach eine Lücke und einer solchen Lücke ggf. eine weitere solche Formation folgen kann, die nachfolgend transportiert wird. Eine solche Abfolge kann sich wiederholen, ggf. auch mehrfach, vielfach oder in unbestimmter Zahl. Die geschlossene Formation kann aber auch gemäß einer besonders bevorzugten Ausführungsform über die wenigstens eine Transporteinrichtung als Endlos- Formation transportiert und dem Erfassungsbereich des Manipulators zugeführt werden. Eine solches Endlos- Formation besteht aus einer beliebigen Anzahl von in einer Reihe lückenlos hintereinander angeordneten Stückgütern und weist insbesondere keine Unterbrechung zwischen den Stückgütern auf. Aus dieser geschlossenen Formation wird wenigstens ein transportiertes Stückgut klemmend und/oder kraftschlüssig und/oder formschlüssig erfasst, von der geschlossenen Formation räumlich abgetrennt und in eine definierte relative Zielposition und/oder Zielausrichtung gegenüber nachfolgenden Stückgütern der Formation gebracht. Wenn im Zusammenhang der vorliegenden Erfindung von einer klemmenden Erfassung von Stückgütern die Rede ist, so umfasst dies ebenso eine kraftschlüssige und/oder reibschlüssige Erfassung, ein kraftschlüssiges und/oder reibschlüssiges Greifen bzw. Aufnehmen von Stückgütern. Alle diese Varianten des Aufnehmens, Erfassens und/oder Greifens von Stückgütern können gleichermaßen mit einem formschlüssigen Erfassen, Greifen bzw. Aufnehmen der Stückgüter kombiniert sein. Wenn im Zusammenhang der vorliegenden Erfindung von einer Zielposition und/oder Zielausrichtung die Rede ist, so kann dies insbesondere bedeuten, dass die Stückgüter erfasst, verschoben und/oder gedreht werden können, wobei die Stückgüter wahlweise auch nur verschoben (ohne Drehung) bzw. nur gedreht (ohne Verschiebebewegung) werden können.

Vorzugsweise ist vorgesehen, dass zu dem Zeitpunkt des Erfassens mindestens eines Stückgutes zwischen diesem und den direkt nachfolgenden Stückgütern der Formation kein Staudruck oder allenfalls ein sehr geringer Staudruck besteht bzw. herrscht. Sollte sich beim Heranführen der Stückgüter dennoch ein Staudruck aufgebaut haben, so ist dieser vorzugsweise vor dem Erfassen mindestens eines Stückgutes durch geeignete Mittel abzubauen; beispielsweise kann dies durch Auswahl einer geeigneten Oberfläche der Transporteinrichtung für die in Reihe hintereinander bewegten Stückgütern erreicht werden. Insbesondere kann vorgesehen sein, dass die Oberfläche der mindestens einen zuführenden Transporteinrichtung gummiert ist, um ein Verrutschen der Stückgüter auf der Transporteinrichtung zu verhindern bzw. um den Staudruck der ständig nachgeförderten Formation bzw. Stückgutreihe abzubauen bzw. zumindest signifikant zu reduzieren.

Die Vorrichtung zum Umgang mit bewegten Stückgütern umfasst wenigstens eine Transporteinrichtung zur Zuführung der Stückgüter in oben beschriebener Weise zu einem Erfassungsbereich mindestens eines Manipulators der Vorrichtung. Bei der Transporteinrichtung handelt es sich beispielsweise um einen Horizontalförderer, insbesondere ein Horizontalförderband. Von der Transporteinrichtung gelangen die Stückgüter auf eine weitere, insbesondere fluchtende Horizontalfördereinrichtung, auf welcher sie durch den Manipulator der Handhabungsvorrichtung innerhalb des Erfassungsbereiches erfasst und insbesondere auch freigegeben werden. Die Horizontalfördereinrichtung und der Manipulator mit seinem Erfassungsbereich bilden insbesondere das Gruppiermodul der Handhabungsvorrichtung.

Gemäß einer Ausführungsform können die Transporteinrichtung und die Horizontalfördereinrichtung durch fluchten angeordnete Förderbänder ausgebildet sein. Alternativ können die Begriffe Transporteinrichtung und Horizontalfördereinrichtung auch für aufeinander folgende Transportabschnitte eines durchgängigen Förderbandes verwendet werden.

Der Erfassungsbereich im Sinne der vorliegenden Erfindung definiert insbesondere einen Bewegungsraum des wenigstens einen Manipulators der erfindungsgemäßen Vorrichtung. Der mindestens eine Manipulator ist typischerweise und/oder vorzugsweise zum klemmenden und/oder formschlüssigen und/oder kraftschlüssigen Erfassen und/oder Entgegennehmen jeweils mindestens eines Stückgutes aus der mittels der wenigstens einen Transporteinrichtung in den Erfassungsbereich des Manipulators einlaufenden Reihe von hintereinander transportierten Stückgütern ausgebildet. Weiterhin ist der Manipulator zum Abtrennen und selektiven Überführen des mindestens einen erfassten Stückgutes in eine Zielposition und/oder Zielausrichtung ausgebildet.

Gemäß einer Ausführungsform können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter parallel zur Transportrichtung der zulaufenden Stückgüter ausgerichtet.

Aus den insbesondere in Reihe als geschlossene Formation zugeführten Stückgütern, wird im Erfassungsbereich des wenigstens einen Manipulators wenigstens ein transportiertes Stückgut klemmend und/oder kraftschlüssig und/oder formschlüssig vom Manipulator erfasst, von den nachfolgenden Stückgütern räumlich abgetrennt und in eine definierte relative Zielposition und/oder Zielausrichtung gegenüber den nachfolgenden Stückgütern gebracht. Dies erfolgt insbesondere in einem kontinuierlichen Prozess, bei dem die Zufuhr nachfolgender Stückgüter nicht unterbrochen wird, sondern kontinuierlich fortgeführt wird. Die Stückgüter werden nach Verbringen in ihre jeweilige definierte Zielposition mittels der mindestens zwei sich gegenüberliegenden Klemm- und/oder Greifmittel freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sind.

Hierbei werden zumindest Raumkoordinaten und/oder Positions- und/oder Umrissdaten wenigstens eines in Transportrichtung bewegten Stückgutes der zum Erfassungsbereich transportierten Stückgüter vor dem Erfassen durch den Manipulator mit Hilfe eines Detektionsmittels sensorisch erfasst und vorzugsweise einer Steuerungseinrichtung bzw. Steuer- und/oder Auswerteeinheit als Positionswert zur Verfügung gestellt. Die durch das Detektionsmittel erfassten Daten werden verwendet, um die wenigstens eine Horizontalfördereinrichtung und/oder die wenigstens eine Transporteinrichtung auf Grundlage der Raumkoordinaten und/oder Positions- und/oder Umrissdaten zu kalibrieren und/oder zu steuern.

Gemäß einer Ausführungsform der Erfindung können wenigstens eine Transporteinrichtung und wenigstens eine Horizontalfördereinrichtung synchron gesteuert werden, so dass die Bewegung der auf der Transporteinrichtung zugeführten Stückgüter und die Bewegung der auf der Horizontalfördereinrichtung weitergeführten Stückgüter gleichermaßen reguliert wird,

Das wenigstens eine Detektionsmittel kann gemäß einer Ausführungsform der Erfindung eine optische Erfassungseinrichtung sein, insbesondere eine dem Erfassungsbereich und/oder einem Bewegungsraum des wenigstens einen Manipulators räumlich und/oder funktionell zugeordnete und beweglich ausgebildete optische Erfassungseinrichtung. Alternativ kann vorgesehen sein, dass das Detektionsmittel der Transporteinrichtung oder dem Übergangsbereich zwischen Transporteinrichtung und Horizontalfördereinrichtung zugeordnet ist.

Die bewegliche optische Erfassungseinrichtung ist insbesondere in einem Bewegungsbereich parallel zur Transportrichtung der Stückgüter auf oder parallel zu einer Horizontalfördereinrichtung des im Erfassungsbereich des Manipulators angeordneten Gruppiermoduls beweglich. Der Bewegungsbereich wird durch einen Anfangspunkt und einen Endpunkt begrenzt und definiert somit den Erkennungsbereich der optischen Erfassungseinrichtung. Um die Bewegung der optischen Erfassungseinrichtung in Transportrichtung bzw. entgegen der Transportrichtung zu realisieren, ist diese beispielsweise auf einem Schlitten bzw. Laufschlitten angeordnet, der in einer Schiene, einen Zahnriemenantrieb o.ä. verfahren werden kann, wobei die Schiene parallel zu der in einer Flucht innerhalb einer Reihe hintereinander angeordneten Stückgütern neben oder oberhalb der Horizontalfördereinrichtung angeordnet ist. Insbesondere kann die optische Erfassungseinrichtung zwischen dem Anfangspunkt und dem Endpunkt innerhalb des Bewegungsbereiches verfahren werden.

Gemäß einer Ausführungsform deckt der Bewegungsbereich bzw. Erkennungsbereich der optischen Erfassungseinrichtung den gesamten Erfassungsbereich des Manipulators ab. Insbesondere kann die optische Erfassungseinrichtung parallel zur gesamten Länge der Horizontalfördereinrichtung des Gruppiermoduls bewegt werden. Die Bewegung der optischen Erfassungseinrichtung ist vorzugsweise nicht mechanisch an die Bewegung des Manipulators oder an die Bewegung der mindestens einen Horizontalfördereinrichtung gekoppelt. Insbesondere verfügt die optische Erfassungseinrichtung über einen eigenständigen, unabhängigen Antrieb. Gemäß einer Ausführungsform ist die optische Erfassungseinrichtung linearbeweglich, während der Manipulator zumindest innerhalb einer Bewegungsebene, vorzugsweise innerhalb eines dreidimensionalen Raumes verfahrbar ist. Wie nachfolgend noch näher beschrieben wird kann dagegen über die Steuerungseinrichtung bzw. Steuer- und/oder Auswerteeinheit eine elektronische Kopplung zwischen der Horizontalfördereinrichtung und dem Detektionsmittel bzw. der optischen Erfassungseinrichtung vorgesehen sein. Weiterhin kann eine elektronische Kopplung zwischen der wenigstens einen Transporteinrichtung und dem Detektionsmittel bzw. der optischen Erfassungseinrichtung sowie zwischen dem Manipulator und dem Detektionsmittel bzw. der optischen Erfassungseinrichtung vorgesehen sein.

Insbesondere die mindestens eine Horizontalfördereinrichtung und/oder weitere Förderkomponenten der Vorrichtung, beispielsweise die Transporteinrichtung, über die die Stückgüter dem Erfassungsbereich zugeführt werden, können auf Grundlage der ermittelten Raumkoordinaten und/oder Positions- und/oder Umrissdaten kalibriert und/oder angesteuert werden. Weiterhin können die ermittelten Daten auch in Rückkoppelung der Position der beweglichen optischen Erfassungseinrichtung verwendet werden. Beispielsweise kann das Erfassen einer Raumkoordinate oder von entsprechenden Positions- und/oder Umrissdaten eine Aktivierung oder Inaktivierung der optischen Erfassungseinrichtung auslösen, ein Mitführen der optischen Erfassungseinrichtung mit der Transporteinrichtung und/oder Horizontalfördereinrichtung auslösen o.ä. Sobald sich Abweichungen bei den Gebindemaßen u/o der Fördergeschwindigkeit o.ä. ergeben, kann das wie nachfolgend noch näher beschrieben ständig - d.h. für alle nachfolgenden Zyklen bzw. Manipulationsschritte - nachkorrigiert werden.

Bei der lückenlosen Zuführung der Stückgüter innerhalb einer geschlossenen Formation können prozessbedingt kleine Lücken zwischen den Stückgütern auf der Transporteinrichtung entstehen. Wenn sich solche Lücken aufsummieren, besteht insbesondere die Gefahr, dass sich die einlaufenden Stückgüter in Relation zu der definierten Aufnahmeposition des Manipulators verschieben, so dass der Manipulator das jeweilig zu erfassende mindestens eine Stückgut bzw. die jeweilig zu erfassende Gruppe von Stückgütern nicht mehr korrekt greifen kann und es gegebenenfalls zu einer Fehlfunktion der Handhabungsvorrichtung kommt.

Um ein fehlerhaftes Erfassen des mindestens einen Stückguts durch den Manipulator zu verhindern, werden die sensorisch ermittelten Daten beispielsweise verwendet, um die Positionierung der Stückgüter auf den Fördereinrichtungen, insbesondere der Horizontalfördereinrichtung und/oder der Transporteinrichtung, während des laufenden Verfahrens immer wieder neu zu kalibrieren und auszurichten, damit der Manipulator die jeweils benötigte Anzahl von Stückgütern sicher abgreifen kann.

Gemäß einer bevorzugten Ausführungsform der Erfindung umfasst die Vorrichtung zu diesem Zweck eine Steuerungseinrichtung bzw. Steuer- und/oder Auswerteeinheit zur Regelung und/oder Steuerung des Detektionsmittels bzw. der optischen Erfassungseinrichtung und/oder zur Regelung und/oder Steuerung der mindestens einen, Stückgüter vorzugsweise in geschlossener Formation zuführenden, Transporteinrichtung und/oder zur Regelung und/oder Steuerung der mindestens einen dem Erfassungsbereich zugeordneten Horizontalfördereinrichtung und/oder zur Regelung und/oder Steuerung des mindestens einen Manipulators.

Gemäß einer Ausführungsform der Erfindung ist vorgesehen, dass dem Erfassungsbereich des mindestens einen Manipulators eine definierte Anzahl von parallelen, direkt aneinandergrenzenden, jeweils einzeln steuerbaren Horizontalfördereinrichtungen zugeordnet ist, wobei die Anzahl an Horizontalfördereinrichtungen der Anzahl von Transporteinrichtungen entspricht, über die Stückgüter dem Erfassungsbereich des mindestens einen Manipulators zugeführt werden. Beispielsweise werden Stückgüter lückenlos in parallelen Reihen über wenigstens zwei parallele Transporteinrichtungen dem Erfassungsbereich des mindestens einen Manipulators zugeführt und im Erfassungsbereich des mindestens einen Manipulators auf derselben Anzahl an Horizontalfördereinrichtungen weitergeführt. Insbesondere ist im Erfassungsbereich des mindestens einen Manipulators jeder zuführenden Transporteinrichtung eine Horizontalfördereinrichtung fluchtend zugeordnet.

Gemäß einer Ausführungsform der Erfindung ist jeder Horizontalfördereinrichtung eine bewegbare optische Erfassungseinrichtung zugeordnet, die zur Gewinnung von Raumkoordinaten und/oder Positions- und/oder Umrissdaten wenigstens eines in Transportrichtung zuvorderst angeordneten bewegten Stückgutes einer auf der jeweilig fluchtend zugeordneten Transporteinrichtung angeordneten Reihe von Stückgütern vorbereitet und ausgestattet.

Insbesondere ist jeder der mindestens zwei parallelen Horizontalfördereinrichtungen und somit jeder Reihe an insbesondere lückenlos in geschlossener Formation zugeführten Stückgütern ein eigenes Detektionsmittel bzw. eine eigene beweglich ausgebildeten optischen Erfassungseinrichtung zugeordnet. Nach dem Abgreifen von mindestens einem Stückgut einer Reihe durch den Manipulator wird die die IST- Position des neuen, nunmehr zuvorderst angeordneten Stückgutes dieser Reihe durch das jeweils zugeordnete Detektionsmittel bzw. die jeweils zugeordnete optische Erfassungseinrichtung ermittelt. Insbesondere wird das Detektionsmittel bzw. die optische Erfassungseinrichtung parallel zur Transportrichtung der Transporteinrichtung und/oder der Horizontalfördereinrichtung oder entgegen der Transportrichtung der Transporteinrichtung und/oder der Horizontalfördereinrichtung bewegt, bis die entsprechenden Parameter des nunmehr zuvorderst angeordneten Stückgutes der jeweiligen auf der zuführenden Transporteinrichtung und/oder weiterführenden Horizontalfördereinrichtung angeordneten Reihe erfasst sind. Anschließend wird die ermittelte IST- Position des Stückgutes mit einer definierten SOLL- Position verglichen und gegebenenfalls eine Abweichung zwischen der IST- Position und der SOLL- Position ermittelt. Beispielsweise werden die Messwerte an die Steuereinrichtung übermittelt, die den Vergleich zwischen IST- Position und SOLL- Position durchführt und anschließend die Förderkomponenten der Vorrichtung entsprechend regelt und/oder ansteuert.

Vorzugsweise weist jede der Horizontalfördereinrichtungen einen eigenen Antrieb auf, so dass jede der Horizontalfördereinrichtungen unabhängig voneinander steuerbar sind. Gemäß einer Ausführungsform der Erfindung wird bei einer Abweichung zwischen der IST- Position und der SOLL- Position des nunmehr zuvorderst angeordneten Stückgutes, d.h. bei einem sogenannten Versatz, die Horizontalfördereinrichtung, auf der die jeweilige Reihe von Stückgüter angeordnet ist, entsprechend angesteuert und/oder reguliert. Befindet sich die ermittelte IST- Position in Transportrichtung hinter der theoretischen SOLL- Position, wird die Horizontalfördereinrichtung zeitweise, insbesondere kurzzeitig, beschleunigt. Dadurch wird die Position des nunmehr zuvorderst angeordneten Stückgutes und der nachgeordneten Stückgüter der Reihe relativ zum Manipulator korrigiert. Insbesondere wird das nunmehr zuvorderst angeordnete Stückgut in die definierte SOLL- Position relativ zum Manipulator gebracht. Befindet sich dagegen die ermittelte IST- Position in Transportrichtung vor der theoretischen SOLL- Position, wird die Horizontalfördereinrichtung zeitweise, insbesondere kurzzeitig, abgebremst bzw. angehalten, um das nunmehr zuvorderst angeordnete Stückgut in die definierte SOLL-Position relativ zum Manipulator zu bringen.

Weiterhin kann gemäß einer Ausführungsform vorgesehen sein, dass jede der Transporteinrichtungen einen eigenen Antrieb, so dass jede der Transporteinrichtungen unabhängig voneinander steuerbar sind. Vorzugsweise kann eine Transporteinrichtung gemeinsam / synchron mit der in Flucht zu dieser Transporteinrichtung angeordneten Horizontalfördereinrichtung reguliert/gesteuert werden, wobei dies insbesondere auf Grundlage der durch die zugeordnete bewegbare optische Erfassungseinrichtung erfassten Raumkoordinaten und/oder Positions- und/oder Umrissdaten erfolgt. D.h. die aufgrund einer Positionsabweichung ausgelöste Geschwindigkeitsänderung der Bandgeschwindigkeit der Horizontalfördereinrichtung wird analog dazu auch der zuführenden Transporteinrichtung aufgeprägt. Dies ist insbesondere notwendig, um zu verhindern, dass bei einer Geschwindigkeitserhöhung der Horizontalfördereinrichtung im Übergangsbereich zwischen der der Horizontalfördereinrichtung und der Transporteinrichtung eine Lücke zwischen den nachlaufenden Stückgütern innerhalb der Reihe erzeugt wird; bzw. dass bei einem Abbremsen oder kurzzeitigen Anhalten der Horizontalfördereinrichtung im Übergangsbereich zwischen der Horizontalfördereinrichtung und der Transporteinrichtung ein Staudruck durch die nachlaufenden Stückgütern der Reihe erzeugt wird.

Gemäß einer weiteren Ausführungsform können eine Transporteinrichtung und eine hierzu fluchtend angeordnete Horizontalfördereinrichtung als Transporteinheit fördertechnisch miteinander verbunden sein und insbesondere durch einen gemeinsamen Antrieb angetrieben werden.

Nachdem der Manipulator mindestens ein Stückgut der Reihe erfasst und räumlich abgetrennt hat, bewegt sich die optische Erfassungseinrichtung zu der theoretischen SOLL- Position des nunmehr zuvorderst angeordneten Stückgutes und ermittelt dessen genaue IST-Position auf der Horizontalfördereinrichtung, insbesondere die IST-Position des zuvorderst angeordneten Stückgutes relativ zum Manipulator. Dabei kann es je Ausgangsposition der optischen Erfassungsvorrichtung notwendig sein, dass sich die optische Erfassungseinrichtung in Transportrichtung oder entgegen zur Transportrichtung bewegt. Auch ist es möglich, dass sich die Erfassungseinrichtung zuerst in die falsche Richtung bewegt. In diesem Fall können Korrekturmechanismen durch die Steuerungseinrichtung bzw. Steuer- und/oder Auswerteeinheit vorhanden sein, die eine schnelle Richtungskorrektur bewirken.

Liegt die IST-Position des nunmehr zuvorderst angeordneten Stückgutes beispielsweise in Transportrichtung hinter der SOLL-Position und befindet sich die optische Erfassungseinrichtung in einer Position zwischen der IST- und der SOLL-Position, so würde das Abgreifen der vorherig vor dem nunmehr zuvorderst angeordneten Stückgut durch den Manipulator eine Bewegung der optischen Erfassungseinrichtung in Transportrichtung auslösen. Vorzugsweise erfasst die Erfassungseinrichtung nicht nur bestimmte Parameter des zuvorderst angeordneten Stückgutes sondern detektiert auch allgemein die Anwesenheit bzw. Abwesenheit von Stückgütern. Da im beschriebenen Fall an der Ausgangsposition der optischen Erfassungseinrichtung keine Stückgüter detektiert werden, korrigiert die Steuerungseinrichtung die Bewegungsrichtung der optischen Erfassungseinrichtung, so dass diese entgegen der Transportrichtung bewegt wird, um die korrekte IST-Position des nunmehr zuvorderst angeordneten Stückgutes zu ermitteln.

Wenn im Zusammenhang der Positionserkennung bzw. des Kalibrierverfahrens von einer beweglichen optischen Erfassungseinrichtung die Rede ist, so kann es sich hierbei beispielsweise um eine beweglich ausgebildete und/oder beweglich angeordnete Lichtschranke, einen beweglich ausgebildeten und/oder beweglich angeordneten Laserkantenscanner oder einen anderes geeignetes beweglich ausgebildetes und/oder beweglich angeordnetes Detektionsmittel handeln, das geeignet ist, bestimmte Parameter eines Stückgutes und/oder bestimmte Parameter einer Gruppe von Stückgütern, insbesondere Raumkoordinaten und/oder Positions- und/oder Umrissdaten zu erkennen. Bei Verwendung einer beweglichen Lichtschranke weist diese vorzugsweise einen quer zur Transportrichtung der Stückgüter und in etwa horizontal und/oder parallel zu der Auflage- und/oder Transportebene der Horizontalfördereinrichtung ausgerichteten Strahlengang auf. Durch eine Unterbrechung des Strahlengangs wird beispielsweise die Anwesenheit eines Stückgutes im Erfassungsbereich der optischen Erfassungseinrichtung angezeigt.

Bevorzugt wird die Lichtschrankenanordnung durch eine Reflexionslichtschranke zur Erfassung von Hell-Dunkel-Kontrasten innerhalb eines definierbaren Entfernungsbereichs vom eines Senders/Empfängers ausgebildet. Dies ist insbesondere für eine zweibahnige Verarbeitung von bewegten Stückgütern auf zwei parallelen Horizontalfördereinrichtungen vorteilhaft, bei der jeweils eine optische Erfassungseinrichtung beidseitig zum Erfassungsbereich des mindestens einen Manipulators vorgesehen ist. Jede der optischen Erfassungseinrichtungen ist derart eingestellt, dass sie immer nur Stückgüter der jeweilig zugeordneten Reihe erkennen. Der mindestens eine Manipulator greift nach einem definierten Schema jeweils Stückgüter aus einer der beiden Reihen ab, um diese entsprechend einem zu bildenden Lagenschema anzuordnen und/oder auszurichten. Die IST- Position der jeweils nach dem Abgreifen zuvorderst angeordneten Stückgüter einer Reihe wird ermittelt und zur Korrektur der Position der einlaufenden Stückgüter auf der Horizontalfördereinrichtung und der Transporteinrichtung herangezogen, so wie dies oben beschrieben worden ist.

Sofern anstelle einer Lichtschranke ein sog. Kantenscanner verwendet wird, welcher der Steuer- und/oder Auswerteeinheit Raumkoordinaten und/oder Positions- und/oder Umrissdaten liefert, sind sogar insbesondere zusätzlich noch detailliertere Positionsdaten erfassbar, so beispielsweise eine Schrägstellung und/oder andere Fehlpositionierung eines der Stückgüter, was ggf. bei der Erfassung durch den Manipulator korrigiert werden kann. Beispielsweise wird ein solcher Kantenscanner verwendet, um Raumkoordinaten und/ Positions- und/oder Umrissdaten für das jeweils zuvorderst befindliche Stückgut, insbesondere einer in Transportrichtung nach vorne oder nach hinten weisender Umrisskante zu gewinnen.

Gemäß einer weiteren Ausführungsform wird als optische Erfassungseinrichtung mindestens eine Kamera mit nachgeschalteter Bildauswertung verwendet, aus deren Daten die Steuer- und/oder Auswerteeinheit Raumkoordinaten und/oder Positions- und/oder Umrisswerte für ein bewegtes Stückgut gewinnt, insbesondere Raumkoordinaten und/ Positions- und/oder Umrisswerte für das jeweils zuvorderst befindliche Stückgut und/oder dessen nach vorne weisender Umrisskante.

Die genannten optischen Erfassungseinrichtungen bzw. Sensoreinrichtungen sind beispielhaft zu verstehen. Grundsätzlich können jedoch auch andere Sensorvarianten zum Einsatz kommen, so bspw. Ultraschallsensoren o. dgl. Weitere geeignete Sensoren können vom Fachmann ebenfalls vorteilhaft eingesetzt werden.

Gemäß einer Ausführungsform dient eine Ausführungsform der vorliegenden Erfindung im Wesentlichen der ständigen und/oder zyklisch oder unregelmäßig wiederkehrenden Kalibrierung einer Horizontalfördereinrichtung einer erfindungsgemäßen Vorrichtung bzw. Handhabungsvorrichtung, wie sie zuvor beschrieben wurde. Vorzugsweise dient eine Ausführungsform der vorliegenden Erfindung zusätzlich der ständigen und/oder zyklisch oder unregelmäßig wiederkehrenden Kalibrierung einer fluchtend zur Horizontalfördereinrichtung angeordneten, Stückgüter in Reihe zuführenden Transporteinrichtung einer erfindungsgemäßen Vorrichtung bzw. Handhabungsvorrichtung. Die zu handhabenden und zu positionierenden Stückgüter werden bevorzugt in Reihen als geschlossene Formationen in den Erfassungsbereich des Manipulators transportiert. Der Manipulator kann bspw. maximal zwei, drei oder mehr einlaufende Stückgüter gleichzeitig erfassen. Diese Stückgüter können beispielsweise 2x3 durch eine Umverpackung zusammengefasste Getränkebehälter o.ä. umfassen.

Weiterhin kann vorgesehen sein, dass die Transporteinrichtung und/oder die Horizontalfördereinrichtung zeitweise, insbesondere kurzzeitig, eine Rückwärtsbewegung ausführen können, d.h., eine Bewegung entgegen der Transportrichtung der Stückgüter. Eine solche Bewegung in Gegenrichtung kann als Ausgleichsbewegung dienen, beispielsweise um ungewünschte Lücken zu schließen o.ä.

Die Erfindung betrifft weiterhin eine Förder-, Verarbeitungs- und/oder Verpackungsanlage für Stückgüter mit einer oben beschriebenen Vorrichtung zum Umgang mit bewegten Stückgütern. Der beschriebenen Vorrichtung zum Umgang mit bewegten Stückgütern Förderstrecken und/oder Manipulierstationen zur Anordnung der Stückgüter in für die Vorrichtung verarbeitbare Konfigurationen vorgeordnet und mindestens eine Palettierstation zur Anordnung der mittels der Vorrichtung gruppierten und/oder in Lagenanordnungen gebrachten Stückgüter nachgeordnet.

Die wenigstens eine dem Erfassungsbereich und/oder einem Bewegungsraum des wenigstens einen Manipulators der Vorrichtung zum Umgang mit bewegten Stückgütern zugeordnete, beweglich ausgebildete optische Erfassungseinrichtung zur Gewinnung von Raumkoordinaten und/oder Positions- und/oder Umrissdaten wenigstens eines in Transportrichtung bewegten Stückgutes, verfügt über einen eigenständigen, insbesondere von der mindestens einen Transporteinrichtung, über welche die bewegten Stückgüter zu einem Erfassungsbereich des mindestens einen Manipulators transportierbar sind, und/oder von der mindestens einen Horizontalfördereinrichtung und/oder vom mindestens einen Manipulator unabhängigen Antrieb.

Die Bewegung der optischen Erfassungseinrichtung ist vorzugsweise nicht mechanisch an die Bewegung der mindestens einen Horizontalfördereinrichtung und/oder der mindestens einen Transporteinrichtung und/oder der Bewegung des Manipulators gekoppelt, sondern von diesen mechanisch unabhängig. Jedoch kann eine elektronische Koppelung zwischen der mindestens einen Horizontalfördereinrichtung und/oder der mindestens einen Transporteinrichtung und/oder dem Manipulator und der optischen Erfassungsvorrichtung vorgesehen sein, bei der insbesondere durch entsprechende Signale des Manipulators eine Bewegung der optischen Erfassungseinrichtung in Transportrichtung oder entgegen der Transportrichtung und/oder eine Aktivierung oder Inaktivierung der optischen Erfassungseinrichtung ausgelöst werden kann.

Die von der optischen Erfassungseinrichtung ermittelten Raumkoordinaten und/oder Positions- und/oder Umrissdaten werden zumindest für die Kalibrierung und/oder Steuerung der mindestens einen Horizontalfördereinrichtung und/oder der mindestens einen Transporteinrichtung der Vorrichtung zum Umgang mit bewegten Stückgütern verwendet. Die Daten können beispielsweise auch herangezogen werden, um fortlaufend weitere Maschinenkomponenten der Förder-, Verarbeitungs- und/oder Verpackungsanlage, beispielsweise der Vorrichtung vor- oder nachgeordnete Fördereinrichtungen, die der Vorrichtung nachgeordnete Palettierstation etc., fortlaufen neu zu kalibrieren, um einen störungsfreien Betrieb der Anlage zu gewährleisten.

Ein besonderer Vorteil der erfindungsgemäßen Vorrichtung, des erfindungsgemäßen Verfahrens und der erfindungsgemäßen Förder-, Verarbeitungs- und/oder Verpackungsanlage liegen darin, dass die optische Erfassungseinrichtung gute, zuverlässige Werte liefert, an denen die Position der Stückgüter auf der mindestens einen Horizontalfördereinrichtung und/oder der mindestens einen Transporteinrichtung, die Bewegung des Manipulators und/oder weitere Förder- und/oder Anlagekomponenten schnell angepasst werden kann, so dass Fehler durch ein Aufsummieren von kleinen ungewünschten Lücken zwischen den einlaufenden Stückgütern bzw. Stückgutgruppen direkt korrigiert werden können.

Das Verfahren kann alternativ oder zusätzlich zu den beschriebenen Merkmalen ein oder mehrere Merkmale und / oder Eigenschaften der zuvor beschriebenen Vorrichtung umfassen. Ebenfalls kann die Vorrichtung alternativ oder zusätzlich einzelne oder mehrere Merkmale und / oder Eigenschaften des beschriebenen Verfahrens aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

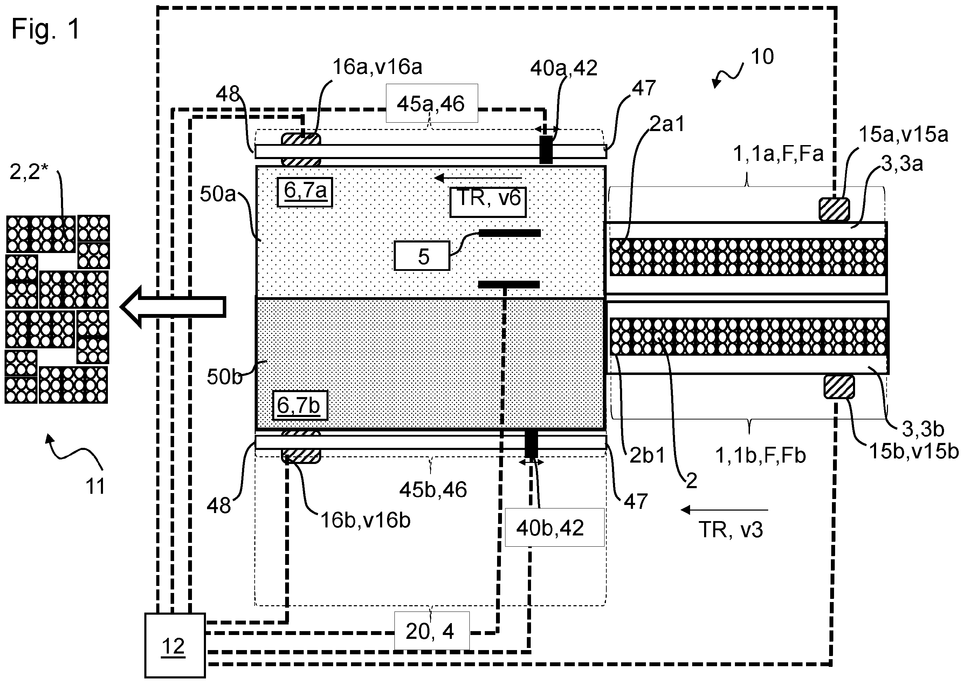

Figuren 1 bis 7 zeigen schematisch einen zeitlichen Ablauf eines erfindungsgemäßen Verfahrens zum Umgang mit in zwei parallelen Reihen hintereinander bewegten Stückgütern durch eine entsprechende Handhabungsvorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Figuren 1 bis 7 zeigen schematisch einen zeitlichen Ablauf eines erfindungsgemäßen Verfahrens zum Umgang mit in zwei parallelen Reihen 1, 1a, 1b hintereinander bewegten Stückgütern 2 mit einer automatisierten Positionserkennung / Kalibrierung der in Reihe 1, 1a, 1b zugeführten Stückgüter 2 innerhalb eines Gruppiermoduls 20 durch eine entsprechende Handhabungsvorrichtung 10. Bei den Stückgütern 2 handelt es sich im dargestellten Ausführungsbeispiel jeweils um Gebinde aus sechs Getränkebehältern, die beispielsweise mit einer Schrumpfverpackung zusammen gehalten werden.

Die Handhabungsvorrichtung 10 umfasst zwei parallel angeordnete erste Transporteinrichtungen 3, 3a, 3b, über welche unmittelbar aufeinanderfolgende Stückgüter 2 in zwei parallelen Reihen 1, 1a, 1b in Transportrichtung TR unterbrechungsfrei und/oder mit im Wesentlichen kontinuierlicher Transportgeschwindigkeit v3 in einen Erfassungsbereich 4 mindestens eines beweg-, verschieb- und/oder rotierbaren Manipulators 5 der Handhabungsvorrichtung 10 transportiert werden. Insbesondere ist vorgesehen, dass den zwei parallelen ersten Transporteinrichtungen 3a, 3b genau ein Erfassungsbereich 4 nur eines einzelnen Manipulators 5 der Handhabungsvorrichtung 10 zugeordnet ist. Die Transporteinrichtungen 3a, 3b werden beispielsweise jeweils durch ein Förderband oder eine andere geeignete Fördereinrichtung gebildet, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücke besteht. Die Stückgüter 2 laufen somit in jeder der Reihen 1a, 1b jeweils in einer sogenannten geschlossenen Formation F, Fa, Fb in den Erfassungsbereich 4 des Manipulators 5 ein.

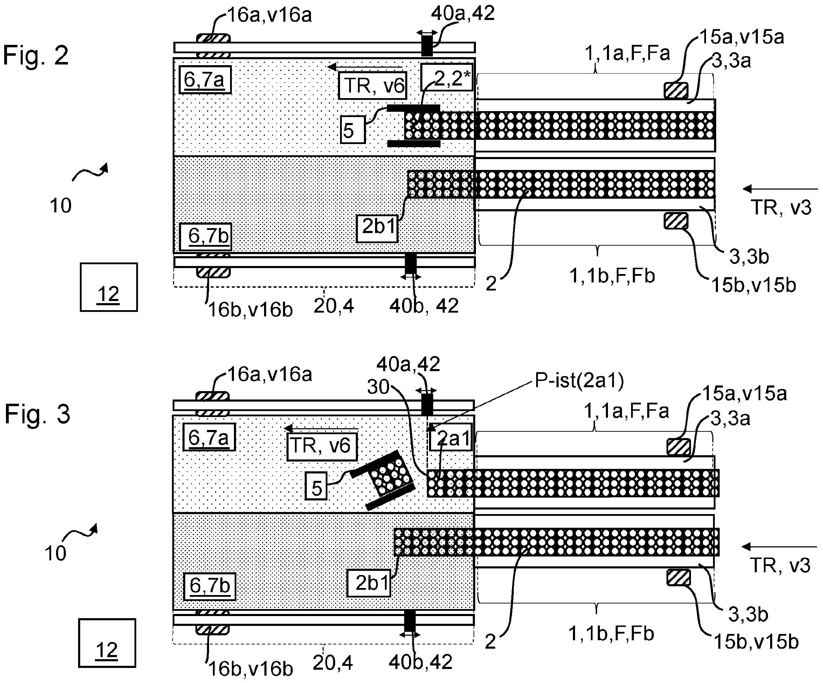

In Figur 1 ist beispielhaft eine zu bildende Lage 11 aus Stückgütern 2 dargestellt. Im Gruppiermodul 20 wird jeweils eine Gruppe an Stückgütern 2 durch den Manipulator 5, beispielsweise einen Greifer, gegriffen und verschoben, gedreht o.ä., um die palettierfähige Lage 11 oder eine Vorgruppierung für die palettierfähige Lage 11 zu bilden. Figuren 2 bis 7 stellen schematisch erste Arbeitsschritte zur Anordnung von Stückgütern 2, 2* zur Ausbildung der Lage 11 dar.

Jedem der beiden zuführenden Transporteinrichtungen 3, 3a, 3b kann ein eigener Antrieb 15a, 15b zugeordnet sein, so dass die beiden Transporteinrichtungen 3a, 3b unabhängig voneinander geregelt werden können. In der Regel werden die beiden Transporteinrichtung 3a, 3b mit derselben konstanten Geschwindigkeit v3 betrieben, bei einer Unregelmäßigkeit in der lückenlosen Zufuhr der Stückgüter 2 kann dies durch eine kurzzeitig Anpassung der jeweiligen Bandgeschwindigkeit v15a bzw. v15b korrigiert werden.

In dem Gruppiermodul 20 sind zwei parallele Horizontalfördereinrichtungen 6, beispielsweise ein erstes Gruppierband 7a und ein zweites Gruppierband 7b angeordnet und insbesondere dem Erfassungsbereich 4 des Manipulators 5 zugeordnet. Die auf der ersten Transporteinrichtung 3a herangeführten Stückgüter 2 werden auf das erste Gruppierband 7a überführt und weiter transportiert und die auf der zweiten Transporteinrichtung 3b herangeführten Stückgüter 2 werden auf das zweite Gruppierband 7b überführt und weiter transportiert. Jedem der beiden Gruppierbänder 7a, 7b ist ein eigener Antrieb 16a, 16b zugeordnet, so dass die beiden Gruppierbänder 7a, 7b unabhängig voneinander und/oder unabhängig von den jeweils zuführenden Transporteinrichtungen 3a, 3b geregelt werden können. In der Regel werden die beiden Gruppierbänder 7a, 7b mit derselben konstanten Geschwindigkeit v6 betrieben, bei einer Unregelmäßigkeit in der lückenlosen Zufuhr der Stückgüter 2 kann dies durch eine kurzzeitig Anpassung der jeweiligen Bandgeschwindigkeit v16a bzw. v16b korrigiert werden

Der Manipulator 5 ist zum klemmenden und/oder kraft- und/oder formschlüssigen Entgegennehmen von Stückgütern 2, 2* innerhalb des Erfassungsbereichs 4 des Gruppiermoduls 20 ausgebildet. Beispielsweise greift der Manipulator 5 im Erfassungsbereich 4 mindestens ein, gemäß Figur 2 mindestens zwei nacheinander angeordnete Stückgüter 2 der von der ersten Transporteinrichtung 3a einlaufenden geschlossenen Formation Fa, trennt diese von der einreihigen Formation Fa ab und überführt das abgetrennte Stückgut 2* bzw. die abgetrennte Gruppe von zwei lückenlos in Reihe angeordneten Stückgütern 2* in eine erste Zielposition P1 und/oder Zielausrichtung (vgl. Figuren 3 bis 5). Dabei wird die Gruppe von Stückgütern 2* durch den Manipulator 5 in Transportrichtung TR von der Formation Fa der Stückgüter 2 beabstandet, zudem kann die Gruppe von Stückgütern 2* gegenüber den Stückgütern 2 der Formation Fa verdreht werden, insbesondere ist in den Figuren 3 bis 5 eine Drehung der abgetrennte Gruppen von zwei lückenlos in Reihe angeordneten Stückgütern 2* entgegen dem Uhrzeigersinn um 90° dargestellt.

Figur 2 zeigt den in Transportrichtung TR lückenlos weitergeführten Transport der Reihe 1 bzw. Formation F im Erfassungsbereich 4 der Handhabungsvorrichtung 10, d.h. insbesondere einen lückenlos weitergeführten Transport der Reihe 1 bzw. Formation F von Stückgütern 2 innerhalb des Gruppiermoduls 20. Insbesondere werden die Stückgüter 2 der jeweiligen Reihe 1a, 1b im Erfassungsbereich 4 im Wesentlichen ohne Unterbrechung und mit unveränderter Transportgeschwindigkeit weitertransportiert, d.h. die Geschwindigkeit v6 der zwei Horizontalfördereinrichtungen 6 entspricht im Wesentlichen der Transportgeschwindigkeit v3 der zwei Transporteinrichtungen 3a, 3b. Die in parallelen Reihen 1a, 1b über die Transporteinrichtungen 3a, 3b ankommenden Stückgüter 2 werden durch den Staudruck der nachfolgenden Stückgüter 2 auf die Horizontalfördereinrichtungen 6 bzw. Gruppierbänder 7a, 7b übergeschoben und dort unterbrechungsfrei weiter befördert.

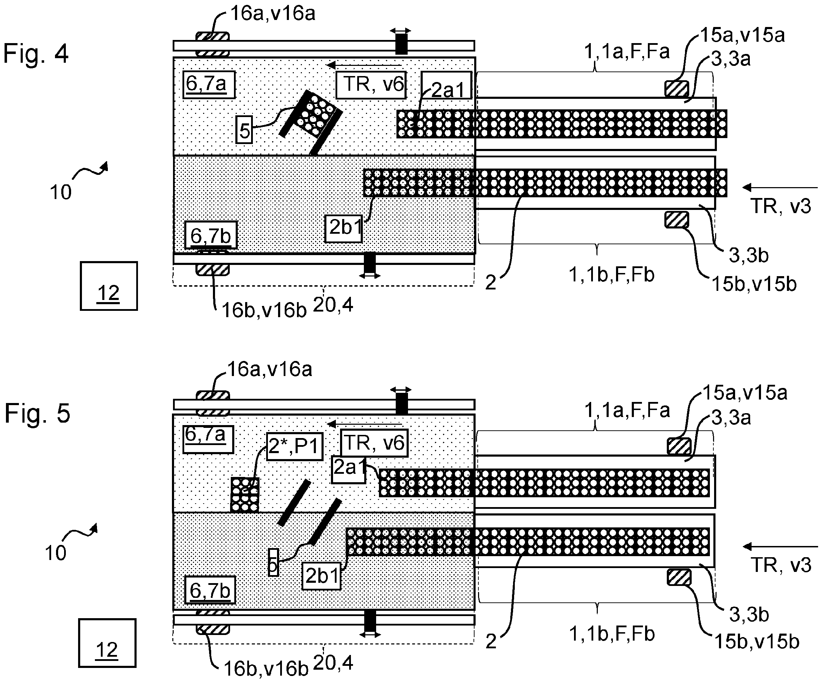

Figuren 3 bis 5 zeigen ein Abgreifen von zwei Stückgütern 2 aus der Formation Fa durch den Manipulator 5. Insbesondere erfasst der Manipulator 5 die ersten zwei Stückgüter 2 der Formation Fa. Beispielsweise senkt sich der Manipulator 5 von oben über die zu erfassenden Stückgüter 2 ab und greift diese. Die vom Manipulator 5 erfassten Stückgüter 2 werden nachfolgend zur Unterscheidung von den in Formation F angeordneten Stückgütern 2 mit dem Bezugszeichen 2* bezeichnet. Der Manipulator 5 ist beispielsweise ein Greiferkopf mit seitlichen Klemmbacken o.ä., der im dargestellten Ausführungsbeispiel an den ersten zwei Stückgütern 2 der Formation Fa ansetzt, diese klemmend und/oder formschlüssig erfasst und von der Formation Fa abtrennt. Die Stückgüter 2* werden anschließend durch den Manipulator 5 in eine definierte relative Zielposition P1 (vergleiche Figur 5) gegenüber den in Formation Fa nachfolgenden Stückgütern 2 gebracht. Hierbei erfolgt eine Drehung der Stückgüter 2*, so dass die Zielausrichtung der Stückgüter 2* gegenüber der Ausrichtung der Stückgüter 2 der Formation Fa geändert ist.

Vorzugsweise werden die erfassten Stückgüter 2* hierbei in einem einzigen, insbesondere unterbrechungsfreien, Manipulationsschritt in die Zielposition P1 und/oder Zielausrichtung überführt, geschoben und/oder gedreht. Hierbei kann vorgesehen sein, dass der Manipulator 5 die erfassten Stückgüter 2* beispielsweise anhebt, zur Zielposition P1 befördert und auf der entsprechenden Horizontalfördereinrichtung 6 bzw. Gruppierband 7a, 7b innerhalb des Erfassungsbereiches 4 wieder absetzt. Alternativ kann vorgesehen sein, dass der Manipulator 5 die Stückgüter 2* auf der entsprechenden Horizontalfördereinrichtung 6 bzw. dem entsprechenden Gruppierband 7a, 7b verschiebt, indem er insbesondere eine Geschwindigkeitskomponente und/oder eine Richtungskomponente auf die abgegriffenen Stückgüter 2* aufbringt.

Bei den hier beschriebenen Manipulationsschritten ist insbesondere vorgesehen, dass sich der Manipulator 5 zumindest beim Erfassen der zwei Stückgüter 2* und bei deren Freigabe in der Zielposition P1 und Zielausrichtung mit einer Geschwindigkeit bewegt, die annähernd bzw. exakt der Transportgeschwindigkeit v3 entspricht, mit der sich die geschlossene Formation F der Stückgüter 2 bewegt.

Die Zielposition P1 stellt insbesondere eine Relativposition gegenüber der Formation Fa dar. Da sich die Transporteinrichtung 3a und somit die Formation Fa im Wesentlichen mit derselben Geschwindigkeit bewegt wie die Horizontalfördereinrichtung 6 bzw. das Gruppierband 7a, 7b, bleibt der relative Abstand zwischen den Stückgütern 2* in der Zielposition P1 und einem noch nicht vom Manipulator 5 erfassten Stückgut 2 der Formation Fa im weiteren Ablauf immer gleich, obwohl sich alle Stückgüter 2, 2* kontinuierlich weiter bewegen.

Da es aber prozessbedingt und/oder aufgrund von Gebindemaßabweichungen der Stückgüter 2 und/oder aufgrund von ungewünschten Abständen beim lückenlosen Zulauf zwischen den Stückgütern 2 zu Abweichungen zwischen einer theoretischen SOLL-Position des jeweils zuvorderst angeordneten Stückgutes 2a1, 2b1 einer Reihe 1a, 1b und dessen wirklicher IST- Position kommen kann, ist es vorteilhaft, die genaue Position des jeweils zuvorderst angeordneten Stückgutes 2a1, 2b1 einer Reihe 1a, 1b direkt vor und/oder innerhalb des Gruppiermoduls 20 zu bestimmen und die Position gegebenenfalls zu korrigieren. Insbesondere anhand einer gemessenen IST- Position des jeweils zuvorderst angeordneten Stückgutes 2a1, 2b1 in Verbindung mit bekannten Verfahrensparametern, beispielsweise mit der Transportgeschwindigkeit v3 der Reihen 1a, 1b auf den zuführenden Transporteinrichtungen 3a, 3b oder der Geschwindigkeit v6 der Stückgüter 2 auf den jeweiligen Horizontalfördereinrichtungen 6 bzw. Gruppierbändern 7a, 7b des Gruppiermoduls 20, ist eine Korrektur der Position der einlaufenden Stückgüter 2 innerhalb des Gruppiermoduls 20 möglich. Dadurch soll sichergestellt werden, dass sich die zu manipulierenden Stückgüter 2, 2* immer in einer Position befinden, in der sich aufgrund des vordefinierten Bewegungsablaufs des Manipulators 5 korrekt gegriffen und entsprechend verschoben, gedreht und/oder anderweitig manipuliert werden können.

Die Positionserkennung erfolgt für jede einlaufende Reihe 1a, 1b unabhängig, vorzugsweise jeweils mit Hilfe eines beweglichen Sensors 40a, 40b. Dabei kann es sich beispielsweise um einen beweglich ausgebildeten und/oder angeordneten Laserkantenscanner 42 oder einen anderes geeignetes beweglich ausgebildetes und/oder angeordnetes optisches Detektionsmittel handeln, das geeignet ist, bestimmte Parameter eines zuvorderst angeordneten Stückgutes 2a1, 2b1 der jeweilig dem Sensor 40a, 40b zugeordneten Reihe 1a, 1b auf optischem Wege zu erkennen.

Die beweglichen Sensoren 40a, 40b sind insbesondere jeweils in einem Bewegungsbereich 45a, 45b parallel zur Transportrichtung TR der Stückgüter 2 auf oder parallel zu den Gruppierbändern 7a, 7b des Gruppiermoduls 20 beweglich. Die Bewegungsbereiche 45a, 45b werden jeweils durch einen Anfangspunkt 47 und einen Endpunkt 48 begrenzt und definieren somit den jeweiligen Erkennungsbereich 50a, 50b der Sensors 40a, 40b. Die Sensoren 40a, 40b sind beispielsweise jeweils auf einem Laufschlitten angeordnet, der über eine Laufschiene 46, einen Zahnriemenantrieb o.ä. parallel zur Transportrichtung TR der Stückgüter 2 zwischen dem Anfangspunkt 47 und dem Endpunkt 48 innerhalb des jeweiligen Bewegungsbereiches 45a, 45b verfahren werden kann. Zur Verbesserung der Übersichtlichkeit wurden der Bewegungsbereich 45, die Laufschiene 46, der Anfangspunkt 47, der Endpunkt 48 und die Erkennungsbereiche 50a, 50b insbesondere nur in Figur 1 dargestellt. Die Sensoren 40a, 40b sind insbesondere nicht mechanisch an den Manipulator 5 gekoppelt. Weiterhin ist die Beweglichkeit der Sensoren 40a, 40b nicht an die Beweglichkeit des Manipulators 5 gekoppelt. Insbesondere weisen die Sensoren 40a, 40b jeweils einen eigenen Antrieb (nicht dargestellt) auf, über den die Sensoren 40a, 40b unabhängig voneinander vorzugsweise parallel zur Transportrichtung TR der einlaufenden Stückgüter 2 oder entgegen der Transportrichtung TR der einlaufenden Stückgüter 2 bewegt werden können.

Der beweggliche Sensor 40a, 40b erkennt mindestens einen bestimmten Parameter des jeweils zuvorderst in den Erkennungsbereich 50a, 50b einlaufenden Stückgutes 2a1, 2b1 (vgl. Fig. 2). Bei Verwendung eines Laserkantenscanner 42 lassen sich insbesondere weitere und/oder detailliertere Positionsparameter und/oder Lageparameter des jeweils erfassten Stückgutes 2 ermitteln, so beispielsweise Fehlpositionierungen o. dgl. Beispielsweise erkennt der Sensor 40a, 40b eine Vorderkante 30 des jeweilig vorauslaufenden Stückgutes 2a1, 2b1 (vergleiche Figur 3).

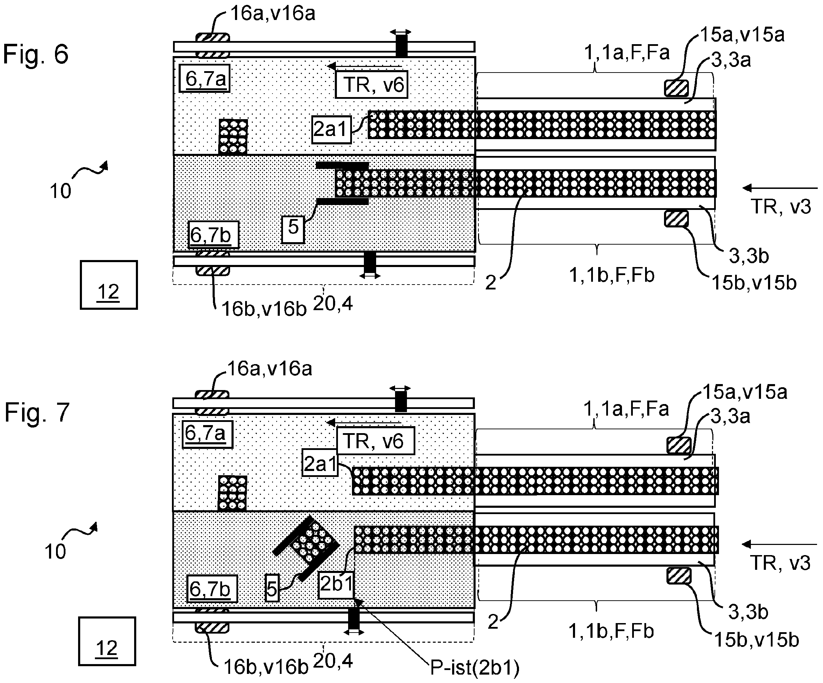

Die Sensoren 40a, 40b dienen dazu, die Position des zuvorderst einlaufenden Stückgutes 2a1, 2b1 der in geschlossener Formation Fa, Fb in Reihen 1a, 1b einlaufenden Stückgüter 2 innerhalb des Gruppiermoduls 20 zu erfassen und diese jeweilig ermittelte IST- Position P-ist(2a1) (vgl. Figur 3) bzw. P-ist(2b1) (vgl. Figur 7) mit einer vorgegebenen theoretischen SOLL- Position zu vergleichen. Hierzu wird die von den Sensoren ermittelte IST- Position P-ist(2a1), P-ist(2b1) an eine entsprechende Steuerungseinrichtung 12 übermittelt. Wird eine Abweichung zwischen der SOLL-Position und der IST- Position ermittelt, kann durch eine entsprechende Geschwindigkeitsänderung des jeweiligen Gruppierbandes 7a, 7b die Position des zuvorderst einlaufenden Stückgutes 2a1, 2b1 und der nachfolgenden Stückgüter 2 der jeweiligen Reihe 1a, 1b im Erfassungsbereich 4 innerhalb des Gruppiermoduls 20 korrigiert werden.

Nachdem der Manipulator 5 gemäß Figur 2 zwei vorauseilende Stückgüter 2, 2* der Reihe 1a erfasst und gemäß Figur 3 von der Reihe 1a abgetrennt hat, erhält der dem Gruppierband 7a und somit der Reihe 1a zugeordnete Sensor 40a ein Signal von der Steuerungseinrichtung 12. Das Signal aktiviert den Sensor 40a, der in Transportrichtung TR der Stückgüter 2 und/oder entgegen der Transportrichtung TR der Stückgüter 2 entlang der Laufschiene 46 seines Bewegungsbereiches 45a verfahren wird, bis er den entsprechenden Parameter des nunmehr zuvorderst angeordneten Stückgutes 2a1 der Reihe 1a ermittelt. Die Richtung, in die sich der Sensor 40a innerhalb seines Bewegungsbereiches 45a bewegt, wird aufgrund der theoretischen SOLL- Position und der Geschwindigkeit v6 des Gruppierbandes 7a und gegebenenfalls weiterer Prozessparameter ermittelt.

Befindet sich der Sensor 40a in Transportrichtung TR hinter der theoretischen SOLL- Position der nunmehr zuvorderst angeordneten Stückgutes 2a1 der Reihe 1a, dann wird der Sensor 40a mit einer gegenüber der Geschwindigkeit v6 erhöhten Geschwindigkeit in Transportrichtung TR bewegt. Um beispielsweise die genaue IST-Position P-ist(2a1) einer Vorderkante 30 des nunmehr zuvorderst angeordneten Stückgutes 2a1 zu ermitteln, kann es sinnvoll sein, dass der Sensor 40a in Transportrichtung TR über die Vorderkante 30 des nunmehr zuvorderst angeordneten Stückgutes 2a1 hinaus bewegt wird und anschließend eine Korrekturbewegung in Gegenrichtung ausführen muss.

Sollte der Sensor 40a keine Vorderkante 30 eines nunmehr zuvorderst angeordneten Stückgutes 2a1 erkennen können, weil sich dieses nicht entsprechend der theoretischen SOLL- Position in Transportrichtung TR vor dem Sensor 40a befand, sondern aufgrund eines Fehlers in Transportrichtung TR hinter dem Sensor 40a angeordnet war, so wird der Sensor 40a, nachdem er den Endpunkt 48 seines Bewegungsbereiches 45a erreicht hat, wieder in Gegenrichtung zu Transportrichtung TR der Stückgüter 2 bewegt, bis er letztendlich die Vorderkante 30 des nunmehr zuvorderst angeordneten Stückgutes 2a1 erfasst. Gegebenenfalls können andere Korrekturmechanismen vorgesehen sein, die bereits zu einem früheren Zeitpunkt eine Richtungsumkehr bewirken, beispielsweise weit der Sensor 40a bei seiner Bewegung keine Stückgüter 2 detektiert. Dies ist ein Hinweis darauf, dass sich der Sensor 40a in Transportrichtung TR vor den Stückgütern 2 der einlaufenden Reihe 1a befinden muss.

Befindet sich der Sensor 40a dagegen in Transportrichtung TR vor der theoretischen SOLL- Position der nunmehr zuvorderst angeordneten Stückgutes 2a1 der Reihe 1a, dann wird der Sensor 40a in Gegenrichtung zur Transportrichtung TR bewegt. Hierbei kann eine relativ langsame Verfahrgeschwindigkeit des Sensors 40a ausreichen, da die Bewegung des Sensors 40a und der einlaufenden Stückgüter 2 der Reihe 1a gegenläufig erfolgt.

Sollte der Sensor 40a keine Vorderkante 30 eines nunmehr zuvorderst angeordneten Stückgutes 2a1 erkennen können, weil sich dieses nicht entsprechend der theoretischen SOLL- Position in Transportrichtung TR hinter dem Sensor 40a befand, sondern aufgrund eines Fehlers in Transportrichtung TR vor dem Sensor 40a angeordnet war, so wird der Sensor 40a, nachdem er den Anfangspunkt 47 seines Bewegungsbereiches 45a erreicht hat, nunmehr mit einer gegenüber der Geschwindigkeit v6 deutlich erhöhten Geschwindigkeit in Transportrichtung TR der Stückgüter 2 bewegt, bis er letztendlich die Vorderkante 30 des nunmehr zuvorderst angeordneten Stückgutes 2a1 erfasst. Hierbei kann es wiederum sinnvoll sein, dass der Sensor 40a in Transportrichtung TR über die Vorderkante 30 des nunmehr zuvorderst angeordneten Stückgutes 2a1 hinaus bewegt wird und anschließend eine Korrekturbewegung in Gegenrichtung ausführen muss.

Die vom Sensor 40a ermittelte IST- Position P-ist(2a1) wird an die Steuerungseinrichtung 12 weitergeleitet und mit der theoretischen SOLL- Position verglichen. Es versteht sich von selbst, dass der Wert der theoretischen SOLL- Position ständig nachberechnet werden muss, da die Stückgüter 2 der Reihe 1a stetig auf dem Gruppierband 7a weiterbewegt werden.

Ermittelt die Steuerungseinrichtung 12 eine Abweichung zwischen der theoretischen SOLL- Position und der gemessenen IST- Position P-ist(2a1), kann durch eine entsprechende Geschwindigkeitsänderung des jeweiligen Gruppierbandes 7a, 7b die Position des zuvorderst einlaufenden Stückgutes 2a1, 2b1 und der nachfolgenden Stückgüter 2 der jeweiligen Reihe 1a, 1b korrigiert werden. Vorzugsweise erfolgt eine synchronisierte Geschwindigkeitsänderung des jeweiligen Gruppierbandes 7a, 7b gemeinsam mit der jeweilig zugeordneten Transporteinrichtung 3a, 3b. Befindet sich das vorderste Stückgut 2a1 der Reihe 1a in Transportrichtung TR hinter der theoretischen SOLL- Position, so erfolgt eine Positionskorrektur durch eine kurzzeitige Erhöhung der Bandgeschwindigkeit v16a. Um zu vermeiden, dass sich durch die kurzzeitige Beschleunigung des Gruppierbandes 7a im Übergangsbereich zwischen der Transporteinrichtung 3a und dem Gruppierband 7a Lücken innerhalb der Reihe 1a von Stückgütern 2 ausbilden können, wird synchron dazu die Bandgeschwindigkeit v15a der Transporteinrichtung 3a ebenfalls erhöht. Befindet sich dagegen das vorderste Stückgut 2a1 der Reihe 1a in Transportrichtung TR vor der theoretischen SOLL- Position, so erfolgt eine Positionskorrektur durch eine kurzzeitige Verringerung der Bandgeschwindigkeit v16a bzw. durch ein kurzzeitiges Anhalten des Gruppierbandes 7a. Um zu vermeiden, dass sich durch das kurzzeitige Abbremsen des Gruppierbandes 7a im Übergangsbereich zwischen der Transporteinrichtung 3a und dem Gruppierband 7a ein erhöhter Staudruck innerhalb der Reihe 1a von Stückgütern 2 ausbilden kann, wird synchron dazu die Bandgeschwindigkeit v15a der Transporteinrichtung 3a ebenfalls entsprechend verringert bzw. angehalten.

Während der Manipulator 5 gemäß den Figuren 2 bis 5 zwei Stückgüter 2 aus der Reihe 1a erfasst, abtrennt und in eine Zielposition P1 überführt, kann gemäß einer nicht dargestellten Ausführungsform vorgesehen sein, dass der zweite bewegliche Sensor 40b mit dem zuvorderst angeordneten Stückgut 2b1 der Reihe 1b mitgeführt wird, so dass die IST- Position des Stückgutes 2b1 immer genau bekannt ist. Alternativ kann vorgesehen sein, dass der zweite bewegliche Sensor 40b die Position des zuvorderst angeordneten Stückgut 2b1 der Reihe 1b in diesem Zeitraum in definierten zeitlichen Abständen kontrolliert, wobei dies beispielsweise vermittels des oben beschriebenen Bewegungsschemas erfolgen kann.

Alternativ kann vorgesehen sein, dass der Sensor 40b die genaue IST- Position des zuvorderst angeordneten Stückgut 2b1 der Reihe 1b erst unmittelbar vor dem in Figur 6 dargestellten Arbeitsschritt ermittelt. D.h. gemäß der alternativen Ausführungsform kann vorgesehen sein, dass die genaue IST- Position P-ist(2b1)des zuvorderst angeordneten Stückgut 2b1 der Reihe 1b direkt vor dem Erfassen und Abgreifen von zwei Stückgütern 2* der Reihe 1b durch den Manipulator 5 ermittelt wird.

Analog zu obiger Beschreibung erfolgt gemäß Figuren 6 und 7 ein Erfassen und Abgreifen zweier Stückgüter 2, 2* der Reihe 1b, um diese in eine durch die Ziellage 11 (vergleiche Figur 1) entsprechende Zielposition (nicht dargestellt) zu verbringen. Im Anschluss daran erhält nunmehr der Sensor 40b ein Signal und wird entlang seines Bewegungsbereichs 45b verfahren, um die IST- Position P-ist(2b1) des nunmehr zuvorderst angeordneten Stückgutes 2b1 der Reihe 1b zu ermitteln.

Gemäß einer alternativen, nicht dargestellten Ausführungsform kann vorgesehen sein, dass der Erfassungsbereich 4 des Manipulators sowie die Bewegungsbereiche 45a, 45b bzw. Erkennungsbereiche 50a, 50b der Sensoren 40a, 40b nur einen in Transportrichtung TR an die Transporteinrichtung 3 grenzenden Teilbereich der durch die Horizontalfördereinrichtungen 6 gebildeten Förderfläche des Gruppiermoduls 20 abdeckt. In dem in Transportrichtung TR dahinter liegenden Bereich der Horizontalfördereinrichtungen 6 können innerhalb des Gruppiermoduls 20 beispielsweise bereits erste Schritte einer nachfolgenden Lagenzentrierung durchgeführt werden. Bei einer weiteren alternativen, nicht dargestellten Ausführungsform können die Sensoren 40a, 40b jeweils einen Bewegungsbereich 45a, 45b aufweisen, der sich über die Horizontalfördereinrichtungen 6 des Gruppiermoduls 20 hinaus erstreckt. Beispielsweise können die Sensoren 40a, 40b in einem solchen Fall auch zumindest teilweise einen Bereich eines in Transportrichtung TR nachgeordneten Lagenzentrierungsmoduls (nicht dargestellt) abfahren und in diesem Bereich gegebenenfalls bestimmte Parameter der zu zentrierenden Lage erfassen.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Obwohl im Ausführungsbeispiel ein zweibahniger Zulauf über zwei Transporteinrichtungen 3a, 3b und eine zweibahnige Weiterführung über Gruppierbänder 7a, 7b beschrieben ist, sind für den Fachmann auch weitere Ausführungsformen mit mehr oder weniger Zufuhrbändern denkbar. Insbesondere kann die Erfindung auch vorteilhaft bei einer Lagenbildung von einbahnig zugeführten Stückgütern eingesetzt werden. Auch wäre ein Einsatz bei einem mehrbahnigen Zulauf denkbar. In diesem Fall müsste der Bewegungsbereich von mittig angeordneten Sensoren entsprechend gewählt werden, so dass diese Sensoren nicht die Bewegung des Manipulators 5 stören.

Es versteht sich außerdem, dass, obwohl in der dargestellten Ausführungsform eine bestimmte Anordnung der Komponenten offenbart ist, andere Anordnungen hieraus Nutzen ziehen. Obwohl bestimmte Schrittfolgen aufgezeigt, beschrieben und beansprucht werden, versteht es sich, dass die Schritte in jeglicher Reihenfolge, einzeln oder in Kombination, ausgeführt werden können, sofern nicht anders angegeben, und trotzdem aus der vorliegenden Erfindung Nutzen ziehen können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezugszeichenliste

- 1,1a,1b: Reihe
- 2,2*: Stückgut
- 2a1, 2b1: zuvorderst angeordnetes Stückgut
- 3,3a,3b: Transporteinrichtung
- 4: Erfassungsbereich
- 5: Manipulator
- 6: Horizontalfördereinrichtung
- 7a, 7b: Gruppierband
- 10: Handhabungsvorrichtung
- 11: Lage
- 12: Steuerungseinrichtung
- 15a, 15b: Antrieb
- 16a, 16b: Antrieb
- 20: Gruppiermodul
- 30: Vorderkante
- 40a, 40b: beweglicher Sensor
- 42: Laserkantenscanner
- 45a, 45b: Bewegungsbereich
- 46: Laufschiene
- 47: Anfangspunkt
- 48: Endpunkt
- 50a, 50b: Erkennungsbereich
- F,Fa,Fb: Formation
- P1: Zielposition
- P-ist(2a1): IST- Position
- P-ist(2b1): IST- Position
- TR: Transportrichtung
- v3: Transportgeschwindigkeit
- v6: Geschwindigkeit
- v15a, v15b: Bandgeschwindigkeit
- v16a, v16b: Bandgeschwindigkeit

## Patentansprüche

1. Vorrichtung (10) zum Umgang mit bewegten Stückgütern (2), umfassend:
- mindestens einen Manipulator (5) für Stückgüter (2),
- wenigstens eine Transporteinrichtung (3), über welche die bewegten Stückgüter (2) zu einem Erfassungsbereich (4) des mindestens einen Manipulators (5) transportierbar sind, sowie
- wenigstens eine dem Erfassungsbereich (4) und/oder einem Bewegungsraum des wenigstens einen Manipulators (5) zugeordnete Horizontalfördereinrichtung (6), über welche die bewegten Stückgüter (2) in dem Erfassungsbereich (4) des mindestens einen Manipulators (5) transportierbar sind;
- wenigstens ein Detektionsmittel zur Erfassung von Raumkoordinaten und/oder Positions- und/oder Umrissdaten der durch den Manipulator (5) abzugreifenden Stückgüter (2);
- wobei die wenigstens eine Horizontalfördereinrichtung (6) und die wenigstens eine Transporteinrichtung (3) auf Grundlage der Raumkoordinaten und/oder Positions- und/oder Umrissdaten kalibrierbar und/oder steuerbar sind.

2. Vorrichtung (10) nach Anspruch 1, wobei wenigstens eine Transporteinrichtung (3) und wenigstens eine Horizontalfördereinrichtung (6) synchron steuerbar sind.

3. Vorrichtung (10) nach Anspruch 1 oder 2, wobei das wenigstens eine Detektionsmittel eine optische Erfassungseinrichtung ist, insbesondere eine bewegbare optische Erfassungseinrichtung (40), insbesondere eine dem Erfassungsbereich (4) und/oder einem Bewegungsraum des wenigstens einen Manipulators (5) zugeordnete bewegbare optische Erfassungseinrichtung (40), insbesondere eine der wenigstens einen Horizontalfördereinrichtung (6) zugeordnete bewegbare optische Erfassungseinrichtung (40).

4. Vorrichtung (10) nach einem der voranstehenden Ansprüche, wobei die Stückgüter (2) in einer Reihe (1) lückenlos hintereinander über die wenigstens eine Transporteinrichtung (3) dem Erfassungsbereich (4) des mindestens einen Manipulators (5), und insbesondere der Horizontalfördereinrichtung (6), zuführbar sind.

5. Vorrichtung (10) nach einem der voranstehenden Ansprüche, wobei die Vorrichtung (10) eine Steuer- und/oder Auswerteeinheit (12) zur Regelung und/oder Steuerung des Detektionsmittels und/oder zur Regelung und/oder Steuerung der mindestens einen Transporteinrichtung (3) und/oder zur Regelung und/oder Steuerung der mindestens einen Horizontalfördereinrichtung (6) und/oder zur Regelung und/oder Steuerung des mindestens einen Manipulators (5) umfasst.

6. Vorrichtung (10) nach einem der voranstehenden Ansprüche, wobei dem Erfassungsbereich (4) des mindestens einen Manipulators (5) eine definierte Anzahl von parallelen, direkt aneinandergrenzenden, jeweils einzeln steuerbaren Horizontalfördereinrichtungen (6) zugeordnet sind, deren Anzahl der jeweiligen Anzahl an Stückgüter (2) zuführenden Transporteinrichtungen (3) entspricht, insbesondere wobei die Vorrichtung (10) mindestens zwei Stückgüter (2) zuführende Transporteinrichtungen (3) und dieselbe Anzahl an weiterführenden Horizontalfördereinrichtungen (6) umfasst, wobei jeder Transporteinrichtung (3) eine Horizontalfördereinrichtung (6) fluchtend zugeordnet ist, wobei jeder Horizontalfördereinrichtung (6) und/oder jeder Transporteinrichtung (3) ein Detektionsmittels zugeordnet ist, insbesondere eine bewegbare optische Erfassungseinrichtung (40), wobei die Detektionsmittel jeweils zur Gewinnung von Raumkoordinaten und/oder Positions- und/oder Umrissdaten wenigstens eines in Transportrichtung (TR) zuvorderst angeordneten bewegten Stückgutes (2) der jeweiligen auf der zuführenden Transporteinrichtung und/oder weiterführenden Horizontalfördereinrichtung (6) angeordneten Reihe (1) vorbereitet und ausgestattet ist.

7. Vorrichtung (10) nach Anspruch 6, wobei jede der Transporteinrichtungen (3) und/oder jede der Horizontalfördereinrichtungen (6) einen eigenen Antrieb (15) umfasst, die unabhängig voneinander steuerbar sind oder wobei eine Transporteinrichtung (3) und eine fluchtende Horizontalfördereinrichtung (6) jeweils eine Transporteinheit bildet, wobei der Transporteinheit ein gemeinsamer Antrieb zugeordnet ist.

8. Vorrichtung (10) nach Anspruch 6 oder 7, wobei eine Transporteinrichtung (3) und die jeweils in Flucht zu dieser Transporteinrichtung (3) angeordnete Horizontalfördereinrichtung (6) gemeinsam / synchron steuerbar sind, insbesondere auf Grundlage der durch das zugeordnete Detektionsmittel erfassten Raumkoordinaten und/oder Positions- und/oder Umrissdaten, insbesondere auf Grundlage der durch die jeweils zugeordnete bewegbare optische Erfassungseinrichtung (40) erfassten Raumkoordinaten und/oder Positions- und/oder Umrissdaten.

9. Vorrichtung (10) nach einem der voranstehenden Ansprüche, bei der das Detektionsmittel, insbesondere die bewegbare optische Erfassungseinrichtung (40), durch wenigstens eine Lichtschrankenanordnung (41) mit einem quer zur Transportrichtung (TR) und in etwa horizontal und/oder parallel zu einer Auflage- und/oder Transportebene der Horizontalfördereinrichtung (6) für die Stückgüter (2) ausgerichteten Strahlengang oder durch mindestens einen Kantenscanner oder durch mindestens eine Kamera mit nachgeschalteter Bildauswertung gebildet ist, insbesondere bei welcher der bewegbaren optischen Erfassungseinrichtung (40) ein eigener, insbesondere vom Manipulator (5) und/oder der mindestens einen Transporteinrichtung (3) und/oder der mindestens einen Horizontalfördereinrichtung (6) unabhängiger, Antrieb zugeordnet ist.

10. Verfahren zum Umgang mit bewegten Stückgütern (2), wobei die Stückgüter (2) zu einem Erfassungsbereich (4) wenigstens eines Manipulators (5) transportiert werden;
- wobei im Erfassungsbereich (4) wenigstens ein transportiertes Stückgut (2) durch den wenigstens einen Manipulator (5) erfasst, von nachfolgenden Stückgütern (2) räumlich abgetrennt und in eine definierte relative Zielposition (P1) und/oder Zielausrichtung gegenüber den jeweils nachfolgenden Stückgütern (2) gebracht wird,
- wobei zumindest Raumkoordinaten und/oder eine Position eines der in Transportrichtung (TR) zum Erfassungsbereich (4) bewegten, abzugreifenden Stückgüter (2) durch ein Detektionsmittel sensorisch erfasst und einer Steuer- und/oder Auswerteeinheit (12) als Positionswert zur Verfügung gestellt wird, und
- wobei Förderkomponenten auf Grundlage der Raumkoordinaten und/oder Positions- und/oder Umrissdaten kalibriert und/oder gesteuert wird/werden.

11. Verfahren nach Anspruch 10, wobei die Stückgüter (2) über die wenigstens eine Transporteinrichtung (3) jeweils in einer Reihe (1) lückenlos hintereinander dem Erfassungsbereich (4) des mindestens einen Manipulators (5) zugeführt werden, insbesondere einer dem Erfassungsbereich (4) des mindestens einen Manipulators (5) zugeordneten mindestens einen Horizontalfördereinrichtung (6).

12. Verfahren nach Anspruch 10 oder 11, wobei die Stückgüter (2) in parallelen Reihen (1) über wenigstens zwei parallele Transporteinrichtungen (3) dem Erfassungsbereich (4) des mindestens einen Manipulators (5) zugeführt werden und wobei die Stückgüter (2) im Erfassungsbereich (4) des mindestens einen Manipulators (5) auf mindestens zwei parallelen Horizontalfördereinrichtungen (6) weitergeführt werden, insbesondere wobei die Stückgüter (2) im Erfassungsbereich (4) des mindestens einen Manipulators (5) auf derselben Anzahl an parallelen Horizontalfördereinrichtungen (6) weitergeführt werden, die der Anzahl an zuführenden Transporteinrichtungen (3) entspricht.

13. Verfahren nach Anspruch 12, wobei jeder der mindestens zwei parallelen Horizontalfördereinrichtungen (6) und somit jeder Reihe (1) an Stückgütern (2) ein eigenes Detektionsmittel zugeordnet ist, insbesondere eine eigene beweglich ausgebildete optische Erfassungseinrichtung (40), wobei nach Abgreifen von mindestens einem Stückgut (2) einer Reihe (1) durch den Manipulator (5) die IST-Position des nunmehr zuvorderst angeordneten Stückgutes (2) dieser Reihe (1) durch das jeweils zugeordnete Detektionsmittel ermittelt wird, wobei die IST- Position mit einer definierten SOLL- Position verglichen wird und gegebenenfalls eine Abweichung ermittelt wird.

14. Verfahren nach Anspruch 13, wobei bei einer Abweichung zwischen der IST- Position und der SOLL- Position des nunmehr zuvorderst angeordneten Stückgutes (2) der Reihe (1), die Horizontalfördereinrichtung (6), auf der die jeweilige Reihe (1) angeordnet ist, angesteuert und/oder reguliert wird, insbesondere wobei die Horizontalfördereinrichtung (6) kurzzeitig beschleunigt oder kurzzeitig abgebremst oder kurzzeitig angehalten wird, um die Abweichung bzw. einen berechneten Versatz zu korrigieren, so dass das zuvorderst angeordnete Stückgut (2) der Reihe wieder die definierte SOLL- Position auf der Horizontalfördereinrichtung (6) einnimmt.

15. Verfahren nach Anspruch 14, wobei synchron zur Regelung und/oder Steuerung der Horizontalfördereinrichtung (6) die in Flucht zu der Horizontalfördereinrichtung (6) angeordnete Transporteinrichtung (3) gleichermaßen gesteuert und/oder geregelt, insbesondere kurzzeitig beschleunigt oder kurzzeitig abgebremst oder kurzzeitig angehalten wird.
